(19) Europäisches Patentamt / European Patent Office / Office européen des brevets

(11) **EP 4 250 834 A1**

(12) **EUROPEAN PATENT APPLICATION**
published in accordance with Art. 153(4) EPC

(43) Date of publication:
**27.09.2023 Bulletin 2023/39**

(21) Application number: **21914056.3**

(22) Date of filing: **22.12.2021**

(51) International Patent Classification (IPC):
**H04W 64/00** (2009.01)

(52) Cooperative Patent Classification (CPC):
**H04W 64/00**

(86) International application number:
**PCT/CN2021/140268**

(87) International publication number:
**WO 2022/143317 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2020 CN 202011604406**

(71) Applicant: **Huawei Technologies Co., Ltd.**
**Shenzhen, Guangdong 518129 (CN)**

(72) Inventors:
• **FU, Fangyang**
  **Shenzhen, Guangdong 518129 (CN)**
• **ZHANG, Wei**
  **Shenzhen, Guangdong 518129 (CN)**
• **GUO, Shaonan**
  **Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **POSITIONING METHOD AND DEVICE THEREOF**

(57) Embodiments of this application disclose a locating method, applied to a digital indoor system. The locating method provided in embodiments of this application includes: A radio frequency switching unit receives a first message sent by a first remote radio unit through a first module, the radio frequency switching unit receives a second message sent by a second remote radio unit through a second module, the radio frequency switching unit receives a third message sent by a third remote radio unit through a third module, and the radio frequency switching unit receives a fourth message sent by a fourth remote radio unit through a fourth module. In embodiments of this application, locating signals sent by a plurality of remote radio units are received at a same moment, and locating accuracy of a terminal is improved.

FIG. 2

## Description

This application claims priority to Chinese Patent Application No. 202011604406.2, filed with the China National Intellectual Property Administration on December 29, 2020 and entitled "LOCATING METHOD AND DEVICE THEREOF", which is incorporated herein by reference in its entirety.

## TECHNICAL FIELD

Embodiments of this application relate to the field of communication technologies, and specifically, to a locating method and a device thereof.

## BACKGROUND

An indoor digital communication system mainly uses a distributed architecture of a digital indoor system (DIS), which is similar to a LampSite lamp site. The architecture includes a baseband unit BBU, a central switching unit RHUB, and a distributed remote radio unit pRRU.

In a digital indoor system similar to LampSite, radio frequency combination is usually used for signal processing. Uplink signals of pRRUs are combined by an RHUB and then arrive at a BBU. As a result, the BBU cannot distinguish between signal measurement of a single pRRU. In the conventional technology, in a polling measurement manner, pRRUs are enabled to separately measure uplink signals of a user at different moments, and send the uplink signals to an RHUB for combination. In this way, measurement of all the pRRUs corresponding to the RHUB can be completed after a period of time.

Because only one pRRU performs measurement at each polling moment, locating signals received by the pRRUs are signals sent by a terminal at different moments. A longer interval at which the terminal sends the locating signals indicates a longer time interval for measuring the signals. If the terminal moves in this period, final locating accuracy is not high enough.

## SUMMARY

Embodiments of this application provide a locating method, so that messages that are sent by a plurality of remote radio units and that are used for locating a terminal can be received at a same moment. Therefore, duration for receiving different locating signals is shortened, and locating accuracy of the terminal is improved.

A first aspect of embodiments of this application provides a locating method, including:
A radio frequency switching unit receives, through a first switching module, a first message sent by a first remote radio unit through a first module, where the first module is a sending module of the first remote radio unit, the first message is for locating a terminal, and the first switching module is a receiving module of the radio frequency switching unit; the radio frequency switching unit receives, through a second switching module, a second message sent by a second remote radio unit through a second module, where the second module is a sending module of the second remote radio unit, the second message is for locating the terminal, and the second switching module is a receiving module of the radio frequency switching unit; the radio frequency switching unit receives, through a third switching module, a third message sent by a third remote radio unit through a third module, where the third module is a sending module of the third remote radio unit, the third message is for locating the terminal, and the third switching module is a receiving module of the radio frequency switching unit; and the radio frequency switching unit receives, through a fourth switching module, a fourth message sent by a fourth remote radio unit through a fourth module, where the fourth module is a sending module of the fourth remote radio unit, the fourth message is for locating the terminal, and the fourth switching module is a receiving module of the radio frequency switching unit, where the first switching module, the second switching module, the third switching module, and the fourth switching module are different receiving modules of the radio frequency switching unit.

In this embodiment of this application, the radio frequency switching unit receives the first message, the second message, the third message, and the fourth message that are sent by the first remote radio unit, the second remote radio unit, the third remote radio unit, and the fourth remote radio unit through the different sending modules, so that the messages that are for locating and that are sent by the plurality of remote radio units can be received at a same moment, and duration for receiving locating signals is shortened. Therefore, locating accuracy of the terminal is improved.

According to the locating method in the first aspect, in a possible implementation, the first message is a first locating signal, the second message is a second locating signal, the third message is a third locating signal, and the fourth message is a fourth locating signal; and the method further includes: The radio frequency switching unit sends the first locating signal, the second locating signal, the third locating signal, and the fourth locating signal to a base station, where the first locating signal, the second locating signal, the third locating signal, and the fourth locating signal are used for location solution.

In this embodiment of this application, the radio frequency switching unit receives the first locating signal, the second locating signal, the third locating signal, and the fourth locating signal that are sent by the first remote radio unit, the second remote radio unit, the third remote radio unit, and the fourth remote radio unit through the different sending modules, so that the locating signals sent by the plurality of remote radio units may be received at a same moment, and the duration for receiving the locating signals is shortened. Therefore, the locating accuracy of the terminal is improved.

Based on the locating method in the first aspect, in a possible implementation, the first message is first solution information, the second message is second solution information, the third message is third solution information, and the fourth message is fourth solution information; and the method further includes:

The radio frequency switching unit sends the first solution information, the second solution information, the third solution information, and the fourth solution information to a base station, where the first solution information is obtained by the first remote radio unit by performing location solution based on a first locating signal, the second solution information is obtained by the second remote radio unit by performing solution based on a second locating signal, the third solution information is obtained by the third remote radio unit by performing solution based on a third locating signal, and the fourth solution information is obtained by the fourth remote radio unit by performing solution based on a fourth locating signal, where the first locating signal is sent by the terminal to the first remote radio unit, the second locating signal is sent by the terminal to the second remote radio unit, the third locating signal is sent by the terminal to the third remote radio unit, and the fourth locating signal is sent by the terminal to the fourth remote radio unit.

In this embodiment of this application, the first locating signal, the second locating signal, the third locating signal, and the fourth locating signal are solved in the first remote radio unit, the second remote radio unit, the third remote radio unit, and the fourth remote radio unit, so as to avoid impact of intermediate link processing (subband splicing, CPRI, radio frequency combination, and the like) on delay performance. In addition, the first locating signal, the second locating signal, the third locating signal, and the fourth locating signal are respectively solved by the four remote radio units, so that a solution capability in a unit of time is improved.

A second aspect of this application provides a locating method, including:

A first remote radio unit receives, through a first receiving module, a first locating signal sent by a terminal; and
the first remote radio unit performs time of arrival TOA measurement based on the first locating signal to obtain first solution information; and the first remote radio unit sends the first solution information to a radio frequency switching unit.

In this embodiment of this application, the first solution information is obtained by using the first locating signal, and a solution server does not need to perform solution, so that resources of the solution server can be reduced.

Based on the locating method in the second aspect of this application, in a possible implementation, the method further includes: The first remote radio unit receives a first air-interface synchronization correction message sent by the radio frequency switching unit, where the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and the first remote radio unit sends the first synchronization signal to the second remote radio unit based on the air-interface synchronization correction message.

In this embodiment of this application, the first air-interface synchronization correction message is sent, so that air-interface synchronization correction can be performed between the remote radio units, and a base station side does not need to send a reference beacon. Therefore, signaling overheads of a base station are reduced.

Based on the locating method in the second aspect of this application, in a possible implementation, the method further includes: The first remote radio unit receives a second air-interface synchronization correction message sent by the radio frequency switching unit, where the second air-interface synchronization correction message indicates the first remote radio unit to receive a second synchronization signal sent by a third remote radio unit; the first remote radio unit receives, based on the second air-interface synchronization correction message, the second synchronization signal sent by the third remote radio unit; the first radio frequency unit performs calculation based on the second synchronization signal to obtain a second time difference of arrival TDOA, where the second time difference of arrival TDOA is for performing air-interface synchronization compensation on the first remote radio unit; and the first radio frequency unit sends the second time difference of arrival TDOA to the radio frequency switching unit.

In this embodiment of this application, the second air-interface synchronization correction message is received, so that air-interface synchronization correction can be performed between the remote radio units, and the base station side does not need to send a reference beacon. Therefore, the signaling overheads of the base station are reduced.

A third aspect of this application provides a locating method, including:

A first remote radio unit receives a first air-interface synchronization correction message sent by a radio frequency switching unit, where the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and the first remote radio unit sends the first synchronization signal to the second remote radio unit based on the air-interface synchronization correction message.

In this embodiment of this application, the first air-interface synchronization correction message is sent, so that air-interface synchronization correction can be performed between the remote radio units, and a base station side does not need to send a reference beacon. Therefore, signaling overheads of a base station are reduced.

Based on the locating method in the third aspect of this application, in a possible implementation, the first remote radio unit receives a second air-interface synchronization correction message sent by the radio frequency switching unit, where the second air-interface synchronization correction message indicates the first remote radio unit to receive a second synchronization signal sent by a third remote radio unit; the first remote radio unit receives, based on the second air-interface synchronization correction message, the second synchronization signal sent by the third remote radio unit; the first radio frequency unit performs calculation based on the second synchronization signal to obtain a second time difference of arrival TDOA, where the second time difference of arrival TDOA is for performing air-interface synchronization compensation on the first remote radio unit; and the first radio frequency unit sends the second time difference of arrival TDOA to the radio frequency switching unit.

In this embodiment of this application, the second air-interface synchronization correction message is received, so that air-interface synchronization correction can be performed between the remote radio units, and the base station side does not need to send a reference beacon. Therefore, the signaling overheads of the base station are reduced.

A fourth aspect of this application provides a radio frequency switching unit.

The radio frequency switching unit includes:

a receiving unit, configured to receive, through a first switching module, a first message sent by a first remote radio unit through a first module, where the first module is a sending module of the first remote radio unit, the first message is for locating a terminal, and the first switching module is a receiving module of the radio frequency switching unit, where

the receiving unit is further configured to receive, through a second switching module, a second message sent by a second remote radio unit through a second module, where the second module is a sending module of the second remote radio unit, the second message is for locating the terminal, and the second switching module is a receiving module of the radio frequency switching unit;

the receiving unit is further configured to receive, through a third switching module, a third message sent by a third remote radio unit through a third module, where the third module is a sending module of the third remote radio unit, the third message is for locating the terminal, and the third switching module is a receiving module of the radio frequency switching unit;

the receiving unit is further configured to receive, through a fourth switching module, a fourth message sent by a fourth remote radio unit through a fourth module, where the fourth module is a sending module of the fourth remote radio unit, the fourth locating signal is for locating the terminal, and the fourth switching module is a receiving module of the radio frequency switching unit; and

the first switching module, the second switching module, the third switching module, and the fourth switching module are different receiving modules of the radio frequency switching unit.

Based on the radio frequency switching unit in the fourth aspect, in a possible implementation, the first message is a first locating signal, the second message is a second locating signal, the third message is a third locating signal, and the fourth message is a fourth locating signal; and the radio frequency switching unit further includes:

a sending unit, configured to send the first locating signal, the second locating signal, the third locating signal, and the fourth locating signal to a base station, where the first locating signal, the second locating signal, the third locating signal, and the fourth locating signal are used for location solution.

Based on the radio frequency switching unit in the fourth aspect, in a possible implementation, the first message is first solution information, the second message is second solution information, the third message is third solution information, and the fourth message is fourth solution information; and the sending unit is further configured to send the first solution information, the second solution information, the third solution information, and the fourth solution information to the base station, where the first solution information is obtained by the first remote radio unit by performing location solution based on the first locating signal, the second solution information is obtained by the second remote radio unit by performing solution based on the second locating signal, the third solution information is obtained by the third remote radio unit by performing solution based on the third locating signal, and the fourth solution information is obtained by the fourth remote radio unit by performing solution based on the fourth locating signal, where the first locating signal is sent by the terminal to the first remote radio unit, the second locating signal is sent by the terminal to the second remote radio unit, the third locating signal is sent by the terminal to the third remote radio unit, and the fourth locating signal is sent by the terminal to the fourth remote radio unit.

The method performed by each unit in the radio frequency switching unit provided in the fourth aspect of this application is similar to the methods performed by the radio frequency switching unit in the first aspect to the third aspect. Details are not described herein again.

A fifth aspect of this application provides a remote radio unit.

The remote radio unit includes:

a receiving unit, configured to receive, through a first receiving module, a first locating signal sent by a terminal;
a processing unit, configured to perform time of arrival TOA measurement based on the first locating signal to obtain first solution information; and
a sending unit, configured to send the first solution information to a radio frequency switching unit.

Based on the remote radio unit in the fifth aspect, in a possible implementation, the receiving unit is further configured to receive a first air-interface synchronization correction message sent by the radio frequency switching unit, where the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and
the sending unit is further configured to send the first synchronization signal to the second remote radio unit based on the air-interface synchronization correction message.

Based on the remote radio unit in the fifth aspect, in a possible implementation, the receiving unit is specifically configured to receive a second air-interface synchronization correction message sent by the radio frequency switching unit, where the second air-interface synchronization correction message indicates the first remote radio unit to receive a second synchronization signal sent by a third remote radio unit;

the receiving unit is further configured to receive, based on the second air-interface synchronization correction message, the second synchronization signal sent by the third remote radio unit;
the processing unit is further configured to perform calculation based on the second synchronization signal to obtain a second time difference of arrival TDOA, where the second time difference of arrival TDOA is for performing air-interface synchronization compensation on the first remote radio unit; and
the sending unit is further configured to send the second time difference of arrival TDOA to the radio frequency switching unit.

The method performed by each unit in the remote radio unit provided in the fifth aspect of this application is similar to the methods performed by the first remote radio unit in the first aspect to the third aspect. Details are not described herein again.

A sixth aspect of this application provides a remote radio unit.

The remote radio unit includes:

a receiving unit, configured to receive a first air-interface synchronization correction message sent by a radio frequency switching unit, where the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and
a sending unit, configured to send the first synchronization signal to the second remote radio unit based on the air-interface synchronization correction message.

Based on the remote radio unit in the sixth aspect, in a possible implementation, the receiving unit is further configured to receive a second air-interface synchronization correction message sent by the radio frequency switching unit, where the second air-interface synchronization correction message indicates the first remote radio unit to receive a second synchronization signal sent by a third remote radio unit; and

the receiving unit is further configured to receive, based on the second air-interface synchronization correction message, the second synchronization signal sent by the third remote radio unit; and
the remote radio unit further includes:

a processing unit, configured to perform calculation based on the second synchronization signal to obtain a second time difference of arrival TDOA, where the second time difference of arrival TDOA is for performing air-interface synchronization compensation on the first remote radio unit, where
the sending unit is further configured to send the second time difference of arrival TDOA to the radio frequency switching unit.

The method performed by each unit in the remote radio unit provided in the sixth aspect of this application is similar to the methods performed by the first remote radio unit in the first aspect to the third aspect. Details are not described herein again.

A seventh aspect of this application provides a computer storage medium. The computer storage medium stores instructions. When the instructions are executed on a computer, the computer is enabled to perform the method in the implementations of the first aspect to the third aspect of this application.

An eighth aspect of this application provides a computer program product. When the computer program product is executed on a computer, the computer is enabled to perform the method in the implementations of the first aspect to the third aspect of this application.

According to the foregoing technical solutions, it can be learned that embodiments of this application have the following advantages:

In embodiments of this application, the radio frequency switching unit receives the first locating signal, the second locating signal, the third locating signal, and the fourth locating signal that are sent by the first remote radio unit, the second remote radio unit, the third remote radio unit, and the fourth remote radio unit through the different sending modules, so that the locating signals sent by the plurality of remote radio units may be received at a same moment, and duration for receiving the locating signals is shortened. Therefore, locating accuracy of the terminal is improved.

## BRIEF DESCRIPTION OF DRAWINGS

FIG. 1 is a system architectural diagram of a data transmission system according to an embodiment of this application;

FIG. 2 is a schematic flowchart of a locating method according to an embodiment of this application;

FIG. 3 is another schematic flowchart of a locating method according to an embodiment of this application;

FIG. 4 is another schematic flowchart of a locating method according to an embodiment of this application;

FIG. 5 is another schematic flowchart of a locating method according to an embodiment of this application;

FIG. 6 is another schematic flowchart of a locating method according to an embodiment of this application;

FIG. 7 is another schematic flowchart of a locating method according to an embodiment of this application;

FIG. 8 is a schematic structural diagram of a radio frequency switching unit according to an embodiment of this application;

FIG. 9 is another schematic structural diagram of a radio frequency switching unit according to an embodiment of this application;

FIG. 10 is a schematic structural diagram of a remote radio unit according to an embodiment of this application;

FIG. 11 is another schematic structural diagram of a remote radio unit according to an embodiment of this application;

FIG. 12 is another schematic structural diagram of a remote radio unit according to an embodiment of this application;

FIG. 13 is another schematic structural diagram of a radio frequency switching unit according to an embodiment of this application; and

FIG. 14 is another schematic structural diagram of a remote radio unit according to an embodiment of this application.

## DESCRIPTION OF EMBODIMENTS

Embodiments of this application provide a locating method, so that locating signals sent by a plurality of remote radio units can be received at a same moment. Therefore, duration for receiving the locating signals is shortened, and locating accuracy of a terminal is improved.

The following describes the technical solutions in embodiments of this application with reference to the accompanying drawings in embodiments of this application. It is clear that the described embodiments are merely a part rather than all of embodiments of this application. All other embodiments obtained by persons of ordinary skill in the art based on embodiments of this application without creative efforts shall fall within the protection scope of this application.

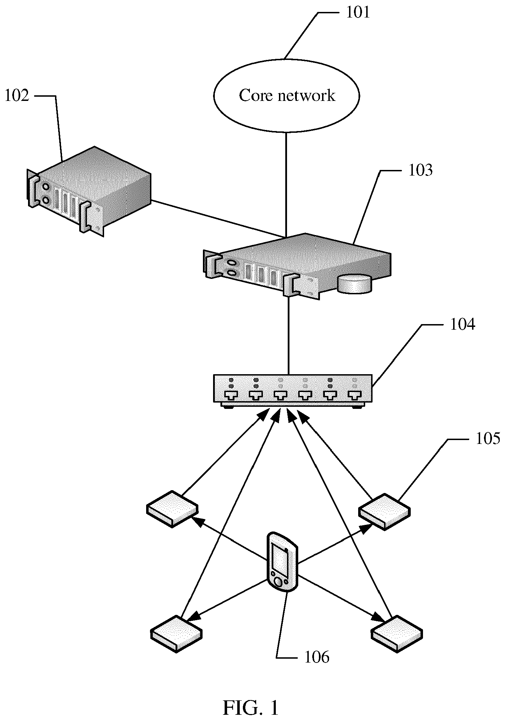

FIG. 1 is a system architectural diagram of a data transmission system according to an embodiment of this application.

As shown in FIG. 1, the data transmission system provided in this embodiment of this application includes a core network 101, a solution server 102, a baseband unit 103, a radio frequency switching unit 104, remote radio units 105, and a terminal 106. One solution server 102 may correspond to one baseband unit 103, a plurality of solution servers 102 may correspond to one baseband unit 103, or one solution server 102 may correspond to a plurality of baseband units 103. This is not specifically limited herein. In this embodiment of this application, a plurality of remote radio units 105 may locate one terminal 106. For example, four remote radio units 105 locate one terminal, six remote radio units 105 locate one terminal, or two remote radio units locate one terminal. This is not specifically limited herein.

The core network 101 and the baseband unit 103 are connected through an optical fiber connection line or a network cable such as cat6a. The baseband unit 103 and the solution server 102 are connected through an optical fiber connection line or a network cable such as cat6a, or may be connected by using an air interface protocol. The baseband unit 103 and the radio frequency switching unit 104 are connected through an optical fiber connection line or a network cable such as cat6a. The radio frequency switching unit 104 and the remote radio unit 105 are connected through an optical fiber connection line or a network cable such as cat6a. The remote radio unit 105 is connected to the terminal 106 by using the air interface protocol.

It should be noted that the solution server 102 may be behind the core network 101, or may be in the core network 101, or may be directly connected to the baseband unit 103. This is not specifically limited herein.

The baseband unit 103 may be an evolved NodeB (evolved NodeB, eNB), a transmission reception point (transmission reception point, TRP), a next generation NodeB (next generation NodeB, gNB) in an NR system, or the like; or a base station in another future mobile communication system. This is not specifically limited in embodiments of this application.

The terminal 106 may be an entity, for example, a mobile phone, configured to receive or transmit a signal. The terminal 106 may also be referred to as a terminal (terminal), user equipment (user equipment, UE), a mobile station (mobile station, MS), a mobile terminal (mobile terminal, MT), or the like. The terminal 106 may be a vehicle having a communication function, an intelligent vehicle, a mobile phone (mobile phone), a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form used by the terminal are not limited in this embodiment of this application.

In the data transmission system provided in this embodiment of this application, the radio frequency switching unit 104 and the remote radio units 105 form a digital indoor system (digital indoor system, DIS). In a method for locating a terminal by using the digital indoor system, information such as an RSSI, a TOA, a TDOA, and an AOA between the terminal and the plurality of remote radio units 105 may be measured, and then a to-be-measured target location is solved based on a geometric feature such as a circle relationship, a hyperbola relationship, or a triangle relationship.

In an existing digital indoor system, radio frequency combination is generally used for signal processing, to be specific, uplink signals of the remote radio units 105 are combined by the radio frequency switching unit 104 and then arrive at the baseband unit 103. However, in this case, a measurement signal of a single remote radio unit cannot be distinguished. To distinguish a measurement signal of a single remote radio unit, in the conventional technology, the remote radio units 105 are enabled to separately measure uplink signals of the terminal 106 at different moments in a polling measurement manner. In other words, at a same moment, the baseband unit 103 receives only a measurement signal of one remote radio unit 105. In this way, after a plurality of moments, measurement signals of the plurality of remote radio units 105 for the same terminal 106 may be received, so that location solution is performed on the terminal 106.

However, because only a measurement signal of one remote radio unit 105 can be received at each moment, the measurement signals received by the remote radio units are also signals that are from the terminal 106 at different moments. A longer periodicity of sending a signal by the terminal 106 indicates a longer time interval of the measurement signals of the remote radio units 105, and a channel change in this period of time may also be great. As a result, locating accuracy of the terminal 106 is finally low.

Embodiments of this application provide a locating method, to improve locating accuracy of a terminal. The following describes in detail the locating method provided in this application.

In embodiments of this application, four remote radio units are used as an example for description. In embodiments of this application, an example in which a base station is a baseband unit is used for description.

In embodiments of this application, a locating signal may be sent to a solution server for solving the locating signal, and the locating signal may be solved on a remote radio unit and then sent to a base station side for locating estimation of a terminal. Therefore, the following separately provides descriptions.

1. A locating signal is sent to a solution server for solving the locating signal.

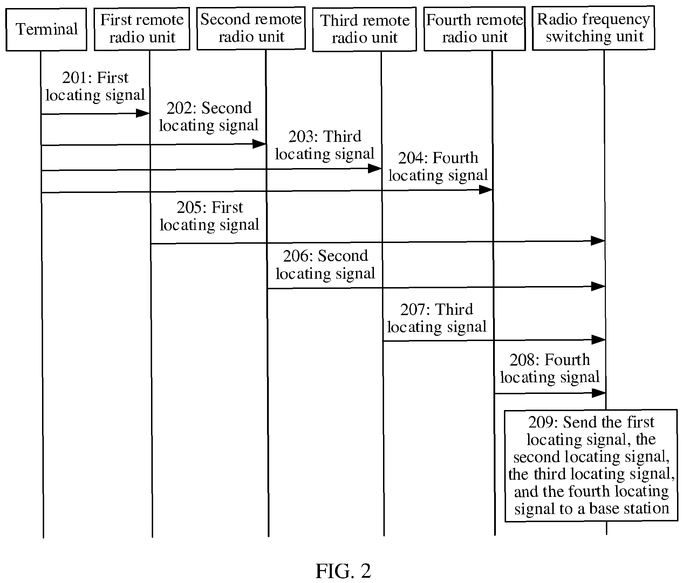

FIG. 2 is a schematic flowchart of a locating method according to an embodiment of this application.

Step 201: A terminal sends a first locating signal to a first remote radio unit.

When a base station needs to locate the terminal, or the terminal needs to be located, the terminal sends the first locating signal to the first remote radio unit, where the first locating signal is for locating the terminal.

Specifically, when the terminal needs to perform locating in a digital indoor system, for example, when the terminal enters a new cell and needs to perform random access, or when the terminal is already connected to a cell and needs to perform locating update, the terminal sends locating signals to remote radio units in the digital indoor system by using an air interface protocol. In this case, the remote radio units located at different locations sequentially receive the locating signals sent by the terminal. To be specific, the first remote radio unit receives the first locating signal sent by the terminal. It should be noted that a location of the first remote radio unit relative to the terminal is not limited in this embodiment.

Step 202: The terminal sends a second locating signal to a second remote radio unit.

The terminal sends the second locating signal to the second remote radio unit, where the second locating signal is for locating the terminal.

It should be noted that the second remote radio unit and the first remote radio unit both belong to the same digital indoor system, where a location of the second remote radio unit relative to the terminal is different from the location of the first remote radio unit relative to the terminal, that is, the second locating signal received by the second remote radio unit is also different from the first locating signal. In addition, a sequence of a moment at which the first remote radio unit receives the first locating signal and a moment at which the second remote radio unit receives the second locating signal is not limited in this embodiment.

Step 203: The terminal sends a third locating signal to a third remote radio unit.

The terminal sends the third locating signal to the third remote radio unit, where the third locating signal is for locating the terminal.

Step 204: The terminal sends a fourth locating signal to a fourth remote radio unit.

The terminal sends the fourth locating signal to the fourth remote radio unit, where the fourth locating signal is for locating the terminal.

In this embodiment, the first remote radio unit, the second remote radio unit, the third remote radio unit, and the fourth remote radio unit respectively receive, at different locations, the locating signals sent by the terminal. To be specific, the first remote radio unit receives the first locating signal, the second remote radio unit receives the second locating signal, the third remote radio unit receives the third locating signal, and the fourth remote radio unit receives the fourth locating signal, where the first remote radio unit, the second remote radio unit, the third remote radio unit, and the fourth remote radio unit may receive the first locating signal, the second locating signal, the third locating signal, and the fourth locating signal at a same time point or at different time points. However, the first locating signal, the second locating signal, the third locating signal, and the fourth locating signal are locating signals sent by the terminal at a same moment, but the first remote radio unit, the second remote radio unit, the third remote radio unit, and the fourth remote radio unit receive the locating signals at different locations or at different time points. Therefore, the remote radio units are separately distinguished. That is, the first locating signal, the second locating signal, the third locating signal, and the fourth locating signal are sent at the same moment for the terminal.

Step 205: The first remote radio unit sends the first locating signal to a radio frequency switching unit.

The first remote radio unit sends the first locating signal to the radio frequency switching unit through a first module.

In a communication system, a remote radio unit is usually multiple-input multiple-output (nTnR), to be specific, one remote radio unit has a plurality of receiving modules and a plurality of sending modules, for example, 4T4R, that is, four receiving modules and four sending modules; or 6T6R, that is, six receiving modules and six sending modules. In this embodiment, the first remote radio unit, the second remote radio unit, the third remote radio unit, and the fourth remote radio unit are all 4T4R remote radio units. In an actual application, the first remote radio unit, the second remote radio unit, the third remote radio unit, and the fourth remote radio unit may alternatively be 6T6R remote radio units or other types of remote radio units. This is not specifically limited herein.

During radio frequency combination, only data sent by same sending modules of all remote radio units is combined, and different sending modules are still independent. Therefore, in this embodiment, each remote radio unit is set to retain data of only one module, to be specific, only one sending module is used in one remote radio unit to send data, and different remote radio units retain different sending modules. In this way, after radio frequency combination, the radio frequency switching unit may simultaneously obtain data sent by different remote radio units through different sending modules. Specifically, the first remote radio unit sends data only in the first module, to be specific, the first remote radio unit sends the first locating signal to the radio frequency switching unit through the first module. It should be noted that the first locating signal is located in a parameter part of a data frame sent by the first remote radio unit to the radio frequency switching unit.

Step 206: The second remote radio unit sends the second locating signal to the radio frequency switching unit.

The second remote radio unit sends the second locating signal to the radio frequency switching unit through a second module.

Specifically, the second remote radio unit retains only the second module to send data, to be specific, the second remote radio unit sends the second locating signal to the radio frequency switching unit through the second module.

Step 207: The third remote radio unit sends the third locating signal to the radio frequency switching unit.

The third remote radio unit sends the third locating signal to the radio frequency switching unit through a third module.

Specifically, the third remote radio unit retains only the third module to send data, to be specific, the third remote radio unit sends the third locating signal to the radio frequency switching unit through the third module.

Step 208: The fourth remote radio unit sends the fourth locating signal to the radio frequency switching unit.

The fourth remote radio unit sends the fourth locating signal to the radio frequency switching unit through a fourth module.

Specifically, the fourth remote radio unit retains only the fourth module to send data, to be specific, the fourth remote radio unit sends the fourth locating signal to the radio frequency switching unit through the fourth module.

Step 209: The radio frequency switching unit sends the first locating signal, the second locating signal, the third locating signal, and the fourth locating signal to the base station.

After the radio frequency switching unit receives the first locating signal, the second locating signal, the third locating signal, and the fourth locating signal that are sent by the first remote radio unit, the second remote radio unit, the third remote radio unit, and the fourth remote radio unit, the radio frequency switching unit sends the first locating signal, the second locating signal, the third locating signal, and the fourth locating signal to the base station, and the base station performs corresponding solution on the first locating signal, the second locating signal, the third locating signal, and the fourth locating signal by using a solution server, to calculate a locating result of the terminal.

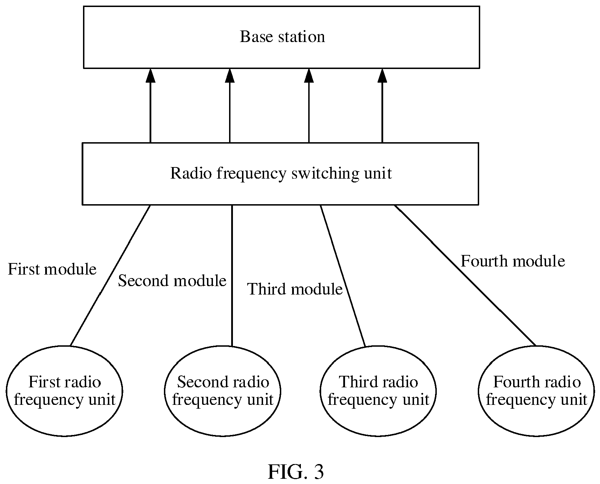

Because the first remote radio unit, the second remote radio unit, the third remote radio unit, and the fourth remote radio unit send the first locating signal, the second locating signal, the third locating signal, and the fourth locating signal to the radio frequency switching unit through the different sending modules, the radio frequency switching unit may separately retain the first locating signal of the first module, the second locating signal of the second module, the third locating signal of the third module, and the fourth locating signal of the fourth module during radio frequency combination. FIG. 3 is a schematic diagram in which the first remote radio unit, the second remote radio unit, the third remote radio unit, and the fourth remote radio unit send the first locating signal, the second locating signal, the third locating signal, and the fourth locating signal to the radio frequency switching unit through the different sending modules. After receiving the first locating signal, the second locating signal, the third locating signal, and the fourth locating signal, the radio frequency switching unit separately sends the first locating signal, the second locating signal, the third locating signal, and the fourth locating signal to the base station through the four sending modules after radio frequency combination.

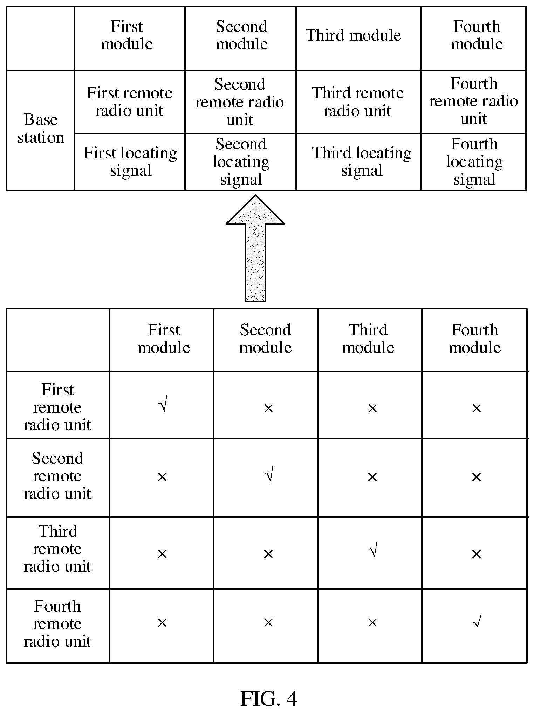

More specifically, as shown in FIG. 4, the first remote radio unit retains the first module to send data, and closes the second module, the third module, and the fourth module. The second remote radio unit retains the second module to send data, and closes the first module, the third module, and the fourth module. The third remote radio unit retains the third module to send data, and closes the first module, the second module, and the fourth module. The fourth remote radio unit retains the fourth module to send data, and closes the first module, the second module, and the third module. The first locating signal, the second locating signal, the third locating signal, and the fourth locating signal are sent to the base station side after being forwarded by the radio frequency switching unit. This is equivalent to that the base station receives the first locating signal sent by the first remote radio unit through the first module, receives the second locating signal sent by the second remote radio unit through the second module, receives the third locating signal sent by the third remote radio unit through the third module, and receives the fourth locating signal sent by the fourth remote radio unit through the fourth module.

In embodiments of this application, the radio frequency switching unit receives the first locating signal, the second locating signal, the third locating signal, and the fourth locating signal that are sent by the first remote radio unit, the second remote radio unit, the third remote radio unit, and the fourth remote radio unit through the different sending modules, so that the locating signals sent by the plurality of remote radio units may be received at a same moment, and duration for receiving the locating signals is shortened. Therefore, locating accuracy of the terminal is improved.

2. The locating signal is solved on a remote radio unit.

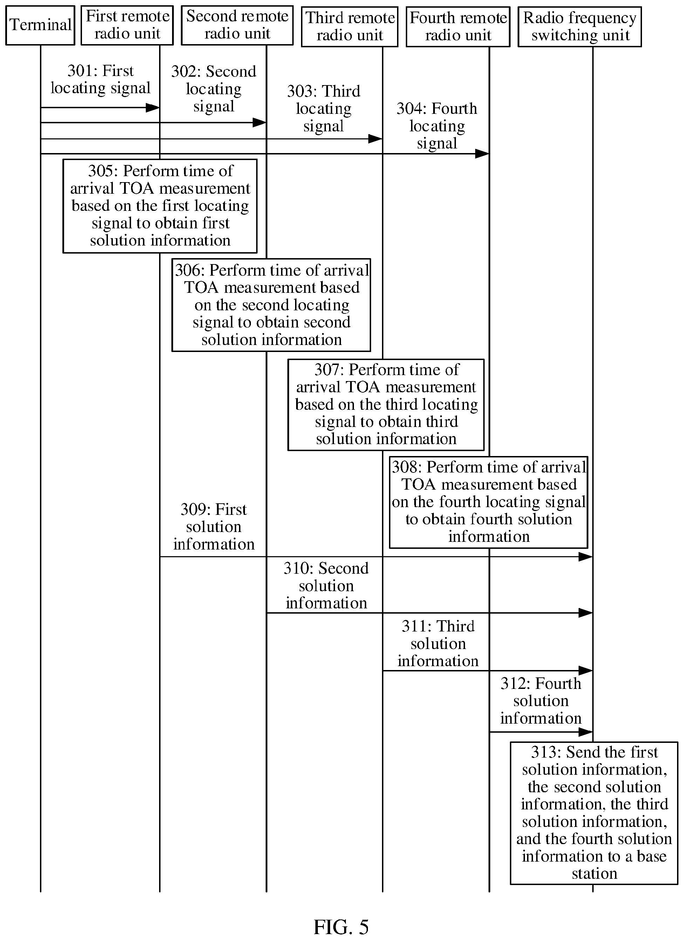

FIG. 5 is another schematic flowchart of a locating method according to an embodiment of this application.

Step 301: A terminal sends a first locating signal to a first remote radio unit.

Step 302: The terminal sends a second locating signal to a second remote radio unit.

Step 303: The terminal sends a third locating signal to a third remote radio unit.

Step 304: The terminal sends a fourth locating signal to a fourth remote radio unit.

In this embodiment, step 301 to step 304 are similar to the method performed in step 201 to step 204. Details are not described herein again.

Step 305: The first remote radio unit performs time of arrival TOA measurement based on the first locating signal to obtain first solution information.

After receiving the first locating signal, the first remote radio unit performs time of arrival TOA measurement based on the first locating signal to obtain the first solution information.

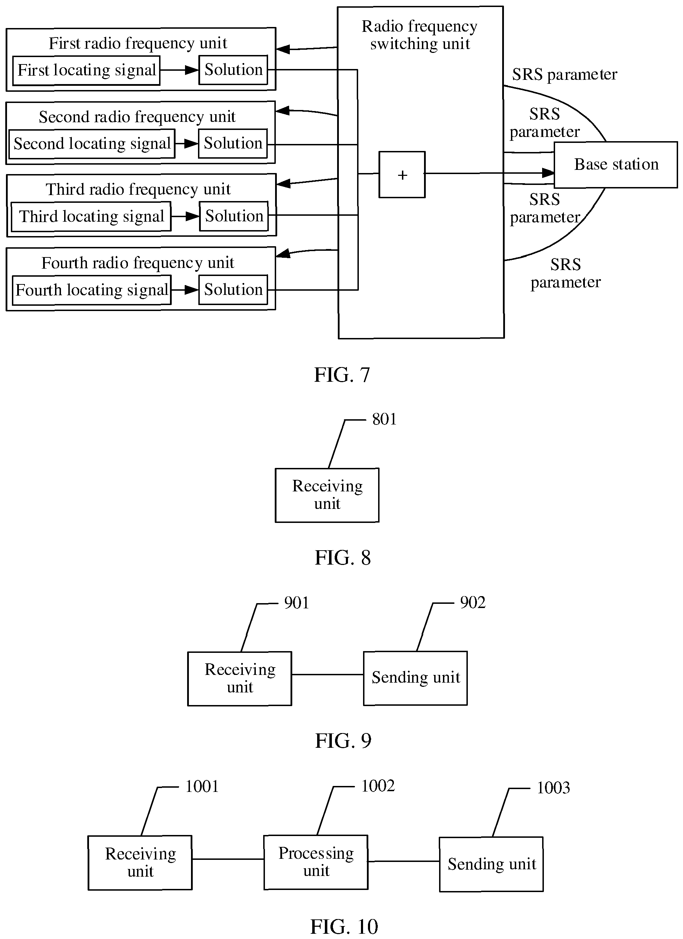

Specifically, as shown in FIG. 7, before the first remote radio unit solves the first locating signal, the first remote radio unit further receives, from a radio frequency switching unit, an SRS parameter sent by a base station. The SRS parameter may include parameters such as a bandwidth, a signal periodicity, and an antenna module, and the SRS parameters are for solving the first locating signal.

Specifically, to enable the first remote radio unit to solve the first locating signal, a first solution module may be added to the first remote radio unit. The first solution module is configured to solve the first locating signal to obtain the first solution information. The first locating signal may be solved by using a TOA algorithm, for example, by using a TOA algorithm such as a least square method or a three-dimensional locating algorithm. This is not specifically limited herein.

Step 306: The second remote radio unit performs time of arrival TOA measurement based on the second locating signal to obtain second solution information.

After receiving the second locating signal, the second remote radio unit performs time of arrival TOA measurement based on the second locating signal to obtain the second solution information.

Specifically, as shown in FIG. 7, before the second remote radio unit solves the second locating signal, the second remote radio unit further receives, from the radio frequency switching unit, an SRS parameter sent by the base station. The SRS parameter may include parameters such as a bandwidth, a signal periodicity, and an antenna module, and the SRS parameters are for solving the second locating signal.

Specifically, to enable the second remote radio unit to solve the second locating signal, a second solution module may be added to the second remote radio unit. The second solution module is configured to solve the second locating signal to obtain the second solution information. The second locating signal may be solved by using a TOA algorithm, for example, by using a TOA algorithm such as a least square method or a three-dimensional locating algorithm. This is not specifically limited herein.

Step 307: The third remote radio unit performs time of arrival TOA measurement based on the third locating signal to obtain third solution information.

After receiving the third locating signal, the third remote radio unit performs time of arrival TOA measurement based on the third locating signal to obtain the third solution information.

Specifically, as shown in FIG. 7, before the third remote radio unit solves the third locating signal, the third remote radio unit further receives, from the radio frequency switching unit, an SRS parameter sent by the base station. The SRS parameter may include parameters such as a bandwidth, a signal periodicity, and an antenna module, and the SRS parameters are for solving the third locating signal.

Specifically, to enable the third remote radio unit to solve the third locating signal, a third solution module may be added to the third remote radio unit. The third solution module is configured to solve the third locating signal to obtain the third solution information. The third locating signal may be solved by using a TOA algorithm, for example, by using a TOA algorithm such as a least square method or a three-dimensional locating algorithm. This is not specifically limited herein.

Step 308: The fourth remote radio unit performs time of arrival TOA measurement based on the fourth locating signal to obtain fourth solution information.

After receiving the fourth locating signal, the fourth remote radio unit performs time of arrival TOA measurement based on the fourth locating signal to obtain the fourth solution information.

Specifically, as shown in FIG. 7, before the fourth remote radio unit solves the fourth locating signal, the fourth remote radio unit further receives, from the radio frequency switching unit, an SRS parameter sent by the base station. The SRS parameter may include parameters such as a bandwidth, a signal periodicity, and an antenna module, and the SRS parameters are for solving the fourth locating signal.

Specifically, to enable the fourth remote radio unit to solve the fourth locating signal, a fourth solution module may be added to the fourth remote radio unit. The fourth solution module is configured to solve the fourth locating signal to obtain the fourth solution information. The fourth locating signal may be solved by using a TOA algorithm, for example, by using a TOA algorithm such as a least square method or a three-dimensional locating algorithm. This is not specifically limited herein.

Step 309: The first remote radio unit sends the first solution information to the radio frequency switching unit.

After the first remote radio unit obtains the first solution information, the first remote radio unit sends the first solution information to the radio frequency switching unit.

Step 310: The second remote radio unit sends the second solution information to the radio frequency switching unit.

After the second remote radio unit obtains the second solution information, the second remote radio unit sends the second solution information to the radio frequency switching unit.

Step 311: The third remote radio unit sends the third solution information to the radio frequency switching unit.

After the third remote radio unit obtains the third solution information, the third remote radio unit sends the third solution information to the radio frequency switching unit.

Step 312: The fourth remote radio unit sends the fourth solution information to the radio frequency switching unit.

After the fourth remote radio unit obtains the fourth solution information, the fourth remote radio unit sends the fourth solution information to the radio frequency switching unit.

Step 313: The radio frequency switching unit sends the first solution information, the second solution information, the third solution information, and the fourth solution information to the base station.

After the radio frequency switching unit receives the first solution information, the second solution information, the third solution information, and the fourth solution information that are sent by the first remote radio unit, the second remote radio unit, the third remote radio unit, and the fourth remote radio unit, the radio frequency switching unit sends the first solution information, the second solution information, the third solution information, and the fourth solution information to the base station.

After receiving the first solution information, the second solution information, the third solution information, and the fourth solution information, the base station sends the first solution information, the second solution information, the third solution information, and the fourth solution information to a solution server, and the solution server calculates a locating result of the terminal.

In this embodiment, step 301 to step 304 have no sequence relationship, step 305 and step 302 to step 304 have no sequence relationship, step 306 and steps 301, 303, and 304 have no sequence relationship, step 307 and steps 301, 302, and 304 have no sequence relationship, step 308 and steps 301 to 303 have no sequence relationship, step 309 and steps 306 to 308 have no sequence relationship, step 310 and steps 305, 307, and 308 have no sequence relationship, step 311 and steps 305, 306, and 308 have no sequence relationship, and step 312 and steps 305 to 308 have no sequence relationship.

In this embodiment of this application, the first locating signal, the second locating signal, the third locating signal, and the fourth locating signal are solved in the first remote radio unit, the second remote radio unit, the third remote radio unit, and the fourth remote radio unit, so as to avoid impact of intermediate link processing (subband splicing, CPRI, radio frequency combination, and the like) on delay performance. In addition, the first locating signal, the second locating signal, the third locating signal, and the fourth locating signal are respectively solved by the four remote radio units, so that a solution capability in a unit of time is improved.

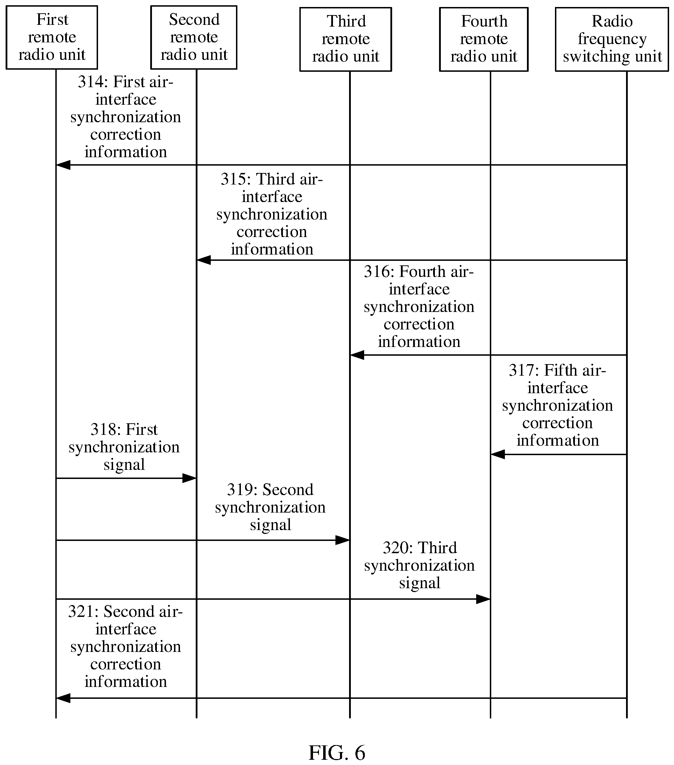

In this embodiment, air-interface synchronization correction may be further performed between the remote radio units, and a base station side does not need to send a reference beacon. For a specific method, refer to the following descriptions in an embodiment shown in FIG. 6. It should be noted that the embodiment shown in FIG. 6 may inherit the embodiment shown in FIG. 2, and may be implemented separately. This is not specifically limited herein.

FIG. 6 is another schematic flowchart of a locating method according to an embodiment of this application.

Step 314: A first remote radio unit receives a first air-interface synchronization correction message sent by a radio frequency switching unit.

When time synchronization needs to be performed between remote radio units, a correction server sends a message for starting synchronization correction to a base station. After receiving the message, the base station starts the time synchronization between the remote radio units. It should be noted that, when time synchronization needs to be performed between the remote radio units, the base station may alternatively send a synchronization correction message, to be specific, the base station triggers the time synchronization between the remote radio units. A specific entity that triggers the time synchronization between the remote radio units is not limited herein.

Specifically, the base station sends the first air-interface synchronization correction message to the radio frequency switching unit, and the radio frequency switching unit forwards the first air-interface synchronization correction message to the first remote radio unit, where the first air-interface synchronization correction message indicates the first remote radio unit to send a synchronization signal to another remote radio unit.

Specifically, the first air-interface synchronization correction message indicates the first remote radio unit to adjust a status to a transmitting state, to be specific, the first remote radio unit sends the synchronization signal to the another remote radio unit, where the synchronization signal is for calculating a time difference of arrival TDOA between the first remote radio unit and the another remote radio unit, and the time difference of arrival TDOA is for performing air-interface synchronization compensation on the another remote radio unit.

Step 315: A second remote radio unit receives a third air-interface synchronization correction message sent by the radio frequency switching unit.

When time synchronization needs to be performed between the remote radio units, the correction server sends the message for starting synchronization correction to the base station. After receiving the message, the base station starts the time synchronization between the remote radio units. Specifically, the base station sends the third air-interface synchronization correction message to the radio frequency switching unit, and the radio frequency switching unit forwards the third air-interface synchronization correction message to the second remote radio unit, where the third air-interface synchronization correction message indicates the second remote radio unit to receive the synchronization signal sent by the first remote radio unit, to be specific, indicates the second remote radio unit to receive a first synchronization signal sent by the first remote radio unit.

Specifically, the third air-interface synchronization correction message indicates the second remote radio unit to adjust a status to a receiving state, to be specific, the second remote radio unit receives the first synchronization signal sent by the first remote radio unit, where the first synchronization signal is for calculating a first time difference of arrival TDOA between the first remote radio unit and the second remote radio unit, and the first time difference of arrival TDOA is for performing air-interface synchronization compensation on the second remote radio unit.

Step 316: A third remote radio unit receives a fourth air-interface synchronization correction message sent by the radio frequency switching unit.

When time synchronization needs to be performed between the remote radio units, the correction server sends the message for starting synchronization correction to the base station. After receiving the message, the base station starts the time synchronization between the remote radio units. Specifically, the base station sends the fourth air-interface synchronization correction message to the radio frequency switching unit, and the radio frequency switching unit forwards the fourth air-interface synchronization correction message to the third remote radio unit, where the fourth air-interface synchronization correction message indicates the third remote radio unit to receive a third synchronization signal sent by the first remote radio unit, to be specific, indicates the third remote radio unit to receive the third synchronization signal sent by the first remote radio unit.

Specifically, the fourth air-interface synchronization correction message indicates the third remote radio unit to adjust a status to a receiving state, to be specific, the third remote radio unit receives the third synchronization signal sent by the first remote radio unit, where the third synchronization signal is for calculating a third time difference of arrival TDOA between the first remote radio unit and the third remote radio unit, and the third time difference of arrival TDOA is for performing air-interface synchronization compensation on the third remote radio unit.

Step 317: A fourth remote radio unit receives a fifth air-interface synchronization correction message sent by the radio frequency switching unit.

When time synchronization needs to be performed between the remote radio units, the correction server sends the message for starting synchronization correction to the base station. After receiving the message, the base station starts the time synchronization between the remote radio units. Specifically, the base station sends the fifth air-interface synchronization correction message to the radio frequency switching unit, and the radio frequency switching unit forwards the fifth air-interface synchronization correction message to the fourth remote radio unit, where the fifth air-interface synchronization correction message indicates the fourth remote radio unit to receive a fourth synchronization signal sent by the first remote radio unit, to be specific, indicates the fourth remote radio unit to receive the fourth synchronization signal sent by the first remote radio unit.

Specifically, the fifth air-interface synchronization correction message indicates the fourth remote radio unit to adjust a status to a receiving state, to be specific, the fourth remote radio unit receives the fourth synchronization signal sent by the first remote radio unit, where the fourth synchronization signal is for calculating a fourth time difference of arrival TDOA between the first remote radio unit and the fourth remote radio unit, and the fourth time difference of arrival TDOA is for performing air-interface synchronization compensation on the fourth remote radio unit.

Step 318: The first remote radio unit sends the first synchronization signal to the second remote radio unit.

The first remote radio unit sends the first synchronization signal to the second remote radio unit based on the first air-interface synchronization correction message.

Specifically, after receiving the first synchronization signal, the second remote radio unit calculates a first receiving processing delay based on the first synchronization signal, where the first receiving processing delay indicates a processing delay that needs to be used when interior of the second remote radio unit processes the first synchronization signal after the second remote radio unit receives the first synchronization signal sent by the first remote radio unit, and the first receiving processing delay may include a delay from a time point at which the second remote radio unit receives the first synchronization signal to a time point at which the first synchronization signal arrives at a processing module in the second remote radio unit, and specifically may further include more processing delays in an actual application process. This is not specifically limited herein.

Specifically, calculation may be performed by using the following formula:

$$Rx\_T2 - Tx\_T1 = Tx\_1 + T12 + Rx\_2$$

$Rx\_T2 - Tx\_T1$ represents a first air-interface time difference, to be specific, an air-interface time difference between the second remote radio unit and the first remote radio unit, and may be calculated by using the first synchronization signal; $Tx\_l$ represents a sending processing delay of sending the first synchronization signal by the first remote radio unit; $T12$ represents duration of transmitting the message from the first remote radio unit to the second remote radio unit through an air interface; and $Rx\_2$ represents the first receiving processing delay. Specifically, the sending processing delay of the first synchronization signal indicates a delay from a time point at which the first remote radio unit prepares to send the first synchronization signal to a time point at which the first remote radio unit sends the first synchronization signal. In this calculation formula, $T12$ is a known parameter, to be specific, $T12$ is duration calculated by a base station side according to an air interface transmission protocol after the base station side locates the first remote radio unit and the second remote radio unit. A specific calculation manner is not limited herein.

After calculating the first receiving processing delay, the second remote radio unit sends the first receiving processing delay to the radio frequency switching unit, the radio frequency switching unit uploads the first receiving processing delay to the base station, the base station sends the first receiving processing delay to the correction server, and finally the correction server performs air-interface synchronization compensation on all the remote radio units based on values of all receiving processing delays sent by all the remote radio units.

Step 319: The first remote radio unit sends a second synchronization signal to the third remote radio unit.

The first remote radio unit sends the third synchronization signal to the third remote radio unit based on the third air-interface synchronization correction message.

Specifically, after receiving the third synchronization signal, the third remote radio unit calculates a second receiving processing delay based on the third synchronization signal, where the second receiving processing delay indicates a processing delay that needs to be used when interior of the third remote radio unit processes the third synchronization signal after the third remote radio unit receives the third synchronization signal sent by the first remote radio unit, and the second receiving processing delay may include a delay from a time point at which the third remote radio unit receives the third synchronization signal to a time point at which the third synchronization signal arrives at a processing module in the third remote radio unit, and specifically may further include more processing delays in an actual application process. This is not specifically limited herein.

Specifically, calculation may be performed by using the following formula:

$$Rx\_T3 - Tx\_T1 = Tx\_1 + T13 + Rx\_3$$

Rx_T3-Tx_T1 represents a second air-interface time difference, to be specific, an air-interface time difference between the third remote radio unit and the first remote radio unit, and may be calculated by using the third synchronization signal; Tx_l represents a sending processing delay of sending the third synchronization signal by the first remote radio unit; T13 represents duration of transmitting the message from the first remote radio unit to the third remote radio unit through an air interface; and Rx_3 represents the second receiving processing delay. Specifically, the sending processing delay of the third synchronization signal indicates a delay from a time point at which the first remote radio unit prepares to send the third synchronization signal to a time point at which the first remote radio unit sends the third synchronization signal. In this calculation formula, T13 is a known parameter, to be specific, T13 is duration calculated by the base station side according to the air interface transmission protocol after the base station side locates the first remote radio unit and the third remote radio unit. A specific calculation manner is not limited herein.

After calculating the second receiving processing delay, the third remote radio unit sends the second receiving processing delay to the radio frequency switching unit, the radio frequency switching unit uploads the second receiving processing delay to the base station, the base station sends the second receiving processing delay to the correction server, and finally the correction server performs air-interface synchronization compensation on all the remote radio units based on the values of all the receiving processing delays sent by all the remote radio units.

Step 320: The first remote radio unit sends the fourth synchronization signal to the fourth remote radio unit.

The first remote radio unit sends the fourth synchronization signal to the fourth remote radio unit based on the fourth air-interface synchronization correction message.

Specifically, after receiving the fourth synchronization signal, the fourth remote radio unit calculates a third receiving processing delay based on the fourth synchronization signal, where the third receiving processing delay indicates a processing delay that needs to be used when interior of the fourth remote radio unit processes the fourth synchronization signal after the fourth remote radio unit receives the fourth synchronization signal sent by the first remote radio unit, and the third receiving processing delay may include a delay from a time point at which the fourth remote radio unit receives the fourth synchronization signal to a time point at which the fourth synchronization signal arrives at a processing module in the fourth remote radio unit, and specifically may further include more processing delays in an actual application process. This is not specifically limited herein.

Specifically, calculation may be performed by using the following formula:

$$Rx\_T4 - Tx\_T1 = Tx\_1 + T14 + Rx\_4$$

Rx_T4-Tx_T1 represents a third air-interface time difference, to be specific, an air-interface time difference between the fourth remote radio unit and the first remote radio unit, and may be calculated by using the fourth synchronization signal; Tx_l represents a sending processing delay of sending the fourth synchronization signal by the first remote radio unit; T14 represents duration of transmitting the message from the first remote radio unit to the fourth remote radio unit through an air interface; and Rx_4 represents the third receiving processing delay. Specifically, the sending processing delay of the fourth synchronization signal indicates a delay from a time point at which the first remote radio unit prepares to send the fourth synchronization signal to a time point at which the first remote radio unit sends the fourth synchronization signal. In this calculation formula, T14 is a known parameter, to be specific, T14 is duration calculated by the base station side according to the air interface transmission protocol after the base station side locates the first remote radio unit and the fourth remote radio unit. A specific calculation manner is not limited herein.

After calculating the third receiving processing delay, the fourth remote radio unit sends the third receiving processing delay to the radio frequency switching unit, the radio frequency switching unit uploads the third receiving processing delay to the base station, the base station sends the third receiving processing delay to the correction server, and finally the correction server performs air-interface synchronization compensation on all the remote radio units based on the values of all the receiving processing delays sent by all the remote radio units.

Specifically, after receiving the receiving processing delays sent by the plurality of remote radio units, the correction server may obtain a difference between receiving processing delays between any two remote radio units based on all the receiving processing delays, and calculate, based on the plurality of differences, a time difference that needs to be supplemented for the single remote radio unit, so as to perform air-interface synchronization compensation on each remote radio unit. For example, the correction server may subtract the second receiving processing delay $Rx\_3$ from the first receiving processing delay $Rx\_2$, then subtract the third receiving processing delay $Rx\_4$ from the second receiving processing delay $Rx\_3$, and then subtract the third receiving processing delay $Rx\_4$ from the first receiving processing delay $Rx\_2$, that is, may solve, according to the three equations, values corresponding to $Rx\_2$, $Rx\_3$, and $Rx\_4$, and then perform air-interface synchronization compensation on the second remote radio unit, the third remote radio unit, and the fourth remote radio unit based on the values corresponding to $Rx\_2$, $Rx\_3$, and $Rx\_4$.

Step 321: The first remote radio unit receives a second air-interface synchronization correction message sent by the radio frequency switching unit.

To improve accuracy of air-interface synchronization compensation, each remote radio unit may be adjusted to a transmitting state once, to send an air-interface synchronization correction message to another remote radio unit. Specifically, the first remote radio unit further receives a second air-interface synchronization message sent by the radio frequency switching unit, where the second air-interface synchronization message indicates the first remote radio unit to receive the second synchronization signal sent by the third remote radio unit.

Specifically, the second air-interface synchronization correction message indicates the first remote radio unit to adjust the status to a receiving state, to be specific, the first remote radio unit receives the second synchronization signal sent by the third remote radio unit, where the second synchronization signal is for calculating a second time difference of arrival TDOA between the third remote radio unit and the first remote radio unit, and the second time difference of arrival TDOA is for performing air-interface synchronization compensation on the first remote radio unit.

After the first remote radio unit receives the second air-interface synchronization message, the first remote radio unit receives, based on the second air-interface synchronization correction message, the second synchronization signal sent by the third remote radio unit. A specific manner of calculating the air-interface synchronization compensation on the first remote radio unit is similar to the manner of calculating the air-interface synchronization compensation on the second remote radio unit in step 318. Details are not described herein again.

It may be understood that, the second remote radio unit and the fourth remote radio unit may re-calculate corresponding air-interface synchronization compensation based on the synchronization signal sent by the third remote radio unit. A specific calculation manner is not described herein again.

In this embodiment, step 314 to step 317 have no sequence relationship, step 318 to step 320 have no sequence relationship, step 318 and steps 316 and 317 have no sequence relationship, step 319 and steps 315 and 317 have no sequence relationship, and step 320 and steps 315 and 316 have no sequence relationship.

In this embodiment of this application, the first remote radio unit, the second remote radio unit, the third remote radio unit, and the fourth remote radio unit send the synchronization correction messages to each other, so that air-interface synchronization correction can be performed between the remote radio units, and the base station side does not need to send a reference beacon. Therefore, signaling overheads of the base station are reduced.

The foregoing describes the locating method in embodiments of this application, and the following describes a remote radio unit and a radio frequency switching unit in this application.

FIG. 8 is a schematic structural diagram of a radio frequency switching unit according to an embodiment of this application.

The radio frequency switching unit includes:

a receiving unit 801, configured to receive, through a first switching module, a first message sent by a first remote radio unit through a first module, where the first module is a sending module of the first remote radio unit, the first message is for locating a terminal, and the first switching module is a receiving module of the radio frequency switching unit, where the receiving unit 801 is further configured to receive, through a second switching module, a second message sent by a second remote radio unit through a second module, where the second module is a sending module of the second remote radio unit, the second message is for locating the terminal, and the second switching module is a receiving module of the radio frequency switching unit;

the receiving unit 801 is further configured to receive, through a third switching module, a third message sent by a third remote radio unit through a third module, where the third module is a sending module of the third remote radio unit, the third message is for locating the terminal, and the third switching module is a receiving module of the radio frequency switching unit;

the receiving unit 801 is further configured to receive, through a fourth switching module, a fourth message sent by a fourth remote radio unit through a fourth module, where the fourth module is a sending module of the fourth remote radio unit, the fourth locating signal is for locating the terminal, and the fourth switching module is a receiving module of the radio frequency switching unit; and

the first switching module, the second switching module, the third switching module, and the fourth switching module are different receiving modules of the radio frequency switching unit.

The method performed by each unit of the radio frequency switching unit in this embodiment is similar to the methods performed by the radio frequency switching unit in the embodiments shown in FIG. 2, FIG. 5, and FIG. 6. Details are not described herein again.

FIG. 9 is another schematic structural diagram of a radio frequency switching unit according to an embodiment of this application.

The radio frequency switching unit includes:

a receiving unit 901, configured to receive, through a first switching module, a first message sent by a first remote radio unit through a first module, where the first module is a sending module of the first remote radio unit, the first message is for locating a terminal, and the first switching module is a receiving module of the radio frequency switching unit, where the receiving unit 901 is further configured to receive, through a second switching module, a second message sent by a second remote radio unit through a second module, where the second module is a sending module of the second remote radio unit, the second message is for locating the terminal, and the second switching module is a receiving module of the radio frequency switching unit;

the receiving unit 901 is further configured to receive, through a third switching module, a third message sent by a third remote radio unit through a third module, where the third module is a sending module of the third remote radio unit, the third message is for locating the terminal, and the third switching module is a receiving module of the radio frequency switching unit;

the receiving unit 901 is further configured to receive, through a fourth switching module, a fourth message sent by a fourth remote radio unit through a fourth module, where the fourth module is a sending module of the fourth remote radio unit, the fourth locating signal is for locating the terminal, and the fourth switching module is a receiving module of the radio frequency switching unit; and

the first switching module, the second switching module, the third switching module, and the fourth switching module are different receiving modules of the radio frequency switching unit.

Optionally, the first message is a first locating signal, the second message is a second locating signal, the third message is a third locating signal, and the fourth message is a fourth locating signal; and the radio frequency switching unit further includes:

a sending unit 902, configured to send the first locating signal, the second locating signal, the third locating signal, and the fourth locating signal to a base station, where the first locating signal, the second locating signal, the third locating signal, and the fourth locating signal are used for location solution.

Optionally, the first message is first solution information, the second message is second solution information, the third message is third solution information, and the fourth message is fourth solution information; and the sending unit is further configured to send the first solution information, the second solution information, the third solution information, and the fourth solution information to the base station, where the first solution information is obtained by the first remote radio unit by performing location solution based on the first locating signal, the second solution information is obtained by the second remote radio unit by performing solution based on the second locating signal, the third solution information is obtained by the third remote radio unit by performing solution based on the third locating signal, and the fourth solution information is obtained by the fourth remote radio unit by performing solution based on the fourth locating signal, where the first locating signal is sent by the terminal to the first remote radio unit, the second locating signal is sent by the terminal to the second remote radio unit, the third locating signal is sent by the terminal to the third remote radio unit, and the fourth locating signal is sent by the terminal to the fourth remote radio unit.

The method performed by each unit of the radio frequency switching unit in this embodiment is similar to the methods performed by the radio frequency switching unit in the embodiments shown in FIG. 2, FIG. 5, and FIG. 6. Details are not described herein again.

FIG. 10 is a schematic structural diagram of a remote radio unit according to an embodiment of this application.

The remote radio unit includes:

a receiving unit 1001, configured to receive, through a first receiving module, a first locating signal sent by a terminal;
a processing unit 1002, configured to perform time of arrival TOA measurement based on the first locating signal to obtain first solution information; and
a sending unit 1003, configured to send the first solution information to a radio frequency switching unit.

The method performed by each unit of the remote radio unit in this embodiment is similar to the methods performed by the first remote radio unit in the embodiments shown in FIG. 2, FIG. 5, and FIG. 6. Details are not described herein again.

FIG. 10 is another schematic structural diagram of a remote radio unit according to an embodiment of this application.

The remote radio unit includes:

> a receiving unit 1001, configured to receive, through a first receiving module, a first locating signal sent by a terminal;
> a processing unit 1002, configured to perform time of arrival TOA measurement based on the first locating signal to obtain first solution information; and
> a sending unit 1003, configured to send the first solution information to a radio frequency switching unit.

Optionally, the receiving unit 1001 is further configured to receive a first air-interface synchronization correction message sent by the radio frequency switching unit, where the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and
the sending unit 1003 is further configured to send the first synchronization signal to the second remote radio unit based on the air-interface synchronization correction message.

Optionally, the receiving unit 1001 is specifically configured to receive a second air-interface synchronization correction message sent by the radio frequency switching unit, where the second air-interface synchronization correction message indicates the first remote radio unit to receive a second synchronization signal sent by a third remote radio unit;

> the receiving unit 1001 is further configured to receive, based on the second air-interface synchronization correction message, the second synchronization signal sent by the third remote radio unit;
> the processing unit 1002 is further configured to perform calculation based on the second synchronization signal to obtain a second time difference of arrival TDOA, where the second time difference of arrival TDOA is for performing air-interface synchronization compensation on the first remote radio unit; and
> the sending unit 1003 is further configured to send the second time difference of arrival TDOA to the radio frequency switching unit.

The method performed by each unit of the remote radio unit in this embodiment is similar to the methods performed by the first remote radio unit in the embodiments shown in FIG. 2, FIG. 5, and FIG. 6. Details are not described herein again.

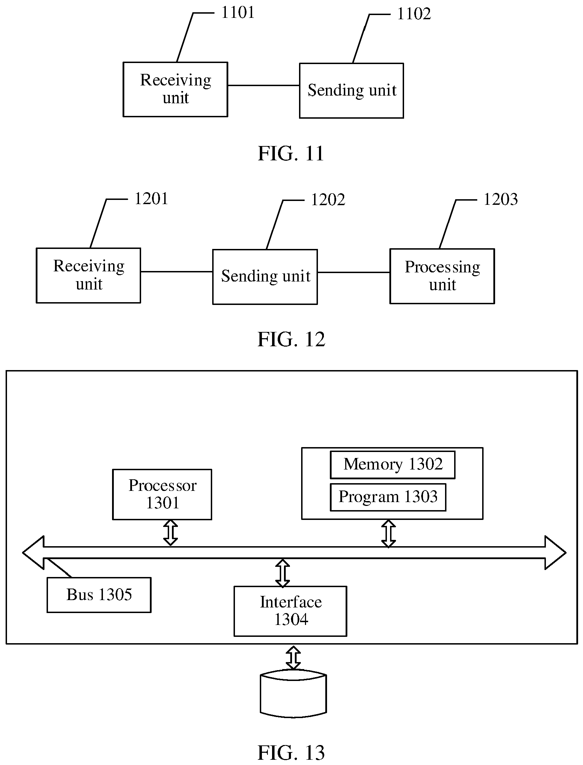

FIG. 11 is another schematic structural diagram of a remote radio unit according to an embodiment of this application.

The remote radio unit includes:

> a receiving unit 1101, configured to receive a first air-interface synchronization correction message sent by a radio frequency switching unit, where the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and
> a sending unit 1102, configured to send the first synchronization signal to the second remote radio unit based on the air-interface synchronization correction message.

The method performed by each unit of the remote radio unit in this embodiment is similar to the methods performed by the first remote radio unit in the embodiments shown in FIG. 2, FIG. 5, and FIG. 6. Details are not described herein again.

FIG. 12 is another schematic structural diagram of a remote radio unit according to an embodiment of this application.

The remote radio unit includes:

> a receiving unit 1201, configured to receive a first air-interface synchronization correction message sent by a radio frequency switching unit, where the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and
> a sending unit 1202, configured to send the first synchronization signal to the second remote radio unit based on the air-interface synchronization correction message.

Optionally, the receiving unit 1201 is further configured to receive a second air-interface synchronization correction message sent by the radio frequency switching unit, where the second air-interface synchronization correction message indicates the first remote radio unit to receive a second synchronization signal sent by a third remote radio unit; and

> the receiving unit 1201 is further configured to receive, based on the second air-interface synchronization correction message, the second synchronization signal sent by the third remote radio unit; and the remote radio unit further includes:

a processing unit 1203, configured to perform calculation based on the second synchronization signal to obtain a second time difference of arrival TDOA, where the second time difference of arrival TDOA is for performing air-interface synchronization compensation on the first remote radio unit, where

the sending unit 1202 is further configured to send the second time difference of arrival TDOA to the radio frequency switching unit.

The method performed by each unit of the remote radio unit in this embodiment is similar to the methods performed by the first remote radio unit in the embodiments shown in FIG. 2, FIG. 5, and FIG. 6. Details are not described herein again.

FIG. 13 is another schematic structural diagram of a radio frequency switching unit according to an embodiment of this application.

The radio frequency switching unit includes a processor 1301, a memory 1302, a bus 1305, and an interface 1304. The processor 1301 is connected to the memory 1302 and the interface 1304. The bus 1305 is separately connected to the processor 1301, the memory 1302, and the interface 1304. The interface 1304 is configured to receive or send data. The processor 1301 is a single-core or multi-core central processing unit, or an application-specific integrated circuit, or one or more integrated circuits configured to implement embodiments of the present invention. The memory 1302 may be a random access memory (random access memory, RAM), or may be a non-volatile memory (non-volatile memory), for example, at least one hard disk memory. The memory 1302 is configured to store computer-executable instructions. Specifically, the computer-executable instructions may include a program 1303.

In this embodiment, when the processor 1301 invokes the program 1303, the radio frequency switching unit in FIG. 13 is enabled to perform the operations performed by the radio frequency switching unit in the embodiment shown in FIG. 2, FIG. 5, or FIG. 6. Details are not described herein again.

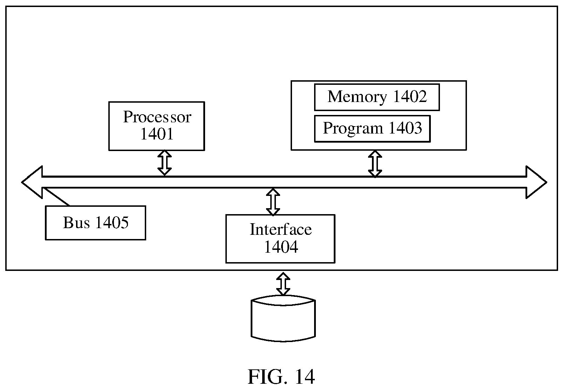

FIG. 14 is another schematic structural diagram of a remote radio unit according to an embodiment of this application.

The remote radio unit includes a processor 1401, a memory 1402, a bus 1405, and an interface 1404. The processor 1401 is connected to the memory 1402 and the interface 1404. The bus 1405 is separately connected to the processor 1401, the memory 1402, and the interface 1404. The interface 1404 is configured to receive or send data. The processor 1401 is a single-core or multi-core central processing unit, or an application-specific integrated circuit, or one or more integrated circuits configured to implement embodiments of the present invention. The memory 1402 may be a random access memory (random access memory, RAM), or may be a non-volatile memory (non-volatile memory), for example, at least one hard disk memory. The memory 1402 is configured to store computer-executable instructions. Specifically, the computer-executable instructions may include a program 1403.

In this embodiment, when the processor 1401 invokes the program 1403, the remote radio unit in FIG. 14 is enabled to perform the operations performed by the first remote radio unit in the embodiment shown in FIG. 2, FIG. 5, or FIG. 6. Details are not described herein again.

It should be understood that the processor mentioned in the radio remote unit or the radio frequency switching unit in the foregoing embodiments of this application, or the processor provided in the foregoing embodiments of this application may be a central processing unit (central processing unit, CPU); or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like The general-purpose processor may be a microprocessor, or the processor may be any conventional processor, or the like.

It should be further understood that there may be one or more processors in the radio remote unit or the radio frequency switching unit in the foregoing embodiments of this application. The quantity may be adjusted based on an actual application scenario. This is merely an example for description herein, and does not constitute a limitation. There may be one or more memories in embodiments of this application. The quantity may be adjusted based on an actual application scenario. This is merely an example for description herein, and does not constitute a limitation.

It should be further noted that when the radio remote unit or the radio frequency switching unit includes the processor (or a processing unit) and the memory, the processor in this application may be integrated with the memory, or the processor may be connected to the memory through an interface. This may be adjusted based on an actual application scenario, and does not constitute a limitation.

This application provides a chip system. The chip system includes a processor, configured to support a radio remote unit or a radio frequency switching unit to implement a function of the controller in the foregoing method, for example, processing data and/or information in the foregoing method. In a possible design, the chip system further includes a memory. The memory is configured to store necessary program instructions and necessary data. The chip system may include a chip, or may include a chip and another discrete component.

In another possible design, when the chip system is a chip in user equipment or an access network or the like, the chip includes a processing unit and a communication unit, where the processing unit may be, for example, a processor, and the communication unit may be, for example, an input/output interface, a pin, or a circuit. The processing unit may execute computer-executable instructions stored in a storage unit, so that a chip in the remote radio unit, the radio frequency switching unit, or the like performs the steps performed by the first remote radio unit or the radio frequency switching unit in any embodiment of FIG. 3 or FIG. 4. Optionally, the storage unit is a storage unit in the chip, such as a register or a buffer, or the storage unit may be a storage unit in a remote radio unit or a radio frequency switching unit but outside the chip, such as a read-only memory (read-only memory, ROM), another type of static storage device capable of storing static information and instructions, or a random access memory (random access memory, RAM).

An embodiment of this application further provides a computer-readable storage medium. The computer-readable storage medium stores a computer program. When the computer program is executed by a computer, the method procedure performed by the controller of the remote radio unit or the radio frequency switching unit in any one of the foregoing method embodiments is implemented. Correspondingly, the computer may be the foregoing remote radio unit or radio frequency switching unit.

It should be understood that the controller or processor mentioned in the foregoing embodiments of this application may be a central processing unit (central processing unit, CPU); or may be a combination of one or more of another general-purpose processor, a digital signal processor (digital signal processor, DSP), an application-specific integrated circuit (application-specific integrated circuit, ASIC), a field programmable gate array (FPGA) or another programmable logic device, a discrete gate or transistor logic device, a discrete hardware component, or the like The general-purpose processor may be a microprocessor, or the processor may be any conventional processor, or the like.

It should be further understood that there may be one or more processors or controllers in the radio remote unit, the radio frequency switching unit, the chip system, or the like in the foregoing embodiments of this application. The quantity may be adjusted based on an actual application scenario. This is merely an example for description herein, and does not constitute a limitation. There may be one or more memories in embodiments of this application. The quantity may be adjusted based on an actual application scenario. This is merely an example for description herein, and does not constitute a limitation.

It should be further understood that in embodiments of this application, the memory, the readable storage medium, or the like mentioned in the radio remote unit or the radio frequency switching unit in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Persons of ordinary skill in the art may understand that all or a part of the steps performed by the remote radio unit, the radio frequency switching unit, or the processor to implement the foregoing embodiments may be implemented by hardware or a program instructing relevant hardware. The program may be stored in a computer-readable storage medium. The storage medium mentioned above may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether these functions are performed by hardware or software depends on particular applications and design constraints of the technical solutions. Persons skilled in the art may use different methods to implement the described functions for each particular application, but it should not be considered that the implementation goes beyond the scope of this application.

When the software is used to implement embodiments, all or some of the steps of the methods described in embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium, or the like.

In the specification, claims, and accompanying drawings of this application, terms such as "first" and "second" are intended to distinguish between similar objects, but do not necessarily indicate a specific order or sequence. It should be understood that the terms used in such a way are interchangeable in appropriate circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The terms used in embodiments of this application are merely for the purpose of illustrating specific embodiments, and are not intended to limit the present invention. Terms "a" and "the" of singular forms used in embodiments of this application are also intended to include plural forms, unless otherwise specified in a context clearly. It should be further understood that, in the descriptions of this application, "/" represents an "or" relationship between associated objects, unless otherwise specified. For example, A/B may represent A or B. A term "and/or" in this application is merely an association relationship between associated objects, and represents that three relationships may exist. For example, A and/or B may represent the following three cases: Only A exists, both A and B exist, and only B exists, where A and B each may be singular or plural.

Depending on the context, for example, words "if" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A locating method, comprising:

   receiving, by a radio frequency switching unit through a first switching module, a first message sent by a first remote radio unit through a first module, wherein the first module is a sending module of the first remote radio unit, the first message is for locating a terminal, and the first switching module is a receiving module of the radio frequency switching unit;
   receiving, by the radio frequency switching unit through a second switching module, a second message sent by a second remote radio unit through a second module, wherein the second module is a sending module of the second remote radio unit, the second message is for locating the terminal, and the second switching module is a receiving module of the radio frequency switching unit;
   receiving, by the radio frequency switching unit through a third switching module, a third message sent by a third remote radio unit through a third module, wherein the third module is a sending module of the third remote radio unit, the third message is for locating the terminal, and the third switching module is a receiving module of the radio frequency switching unit; and
   receiving, by the radio frequency switching unit through a fourth switching module, a fourth message sent by a fourth remote radio unit through a fourth module, wherein the fourth module is a sending module of the fourth remote radio unit, the fourth message is for locating the terminal, and the fourth switching module is a receiving module of the radio frequency switching unit, wherein
   the first switching module, the second switching module, the third switching module, and the fourth switching module are different receiving modules of the radio frequency switching unit.

2. The method according to claim 1, wherein the first message is a first locating signal, the second message is a second locating signal, the third message is a third locating signal, and the fourth message is a fourth locating signal; and the method further comprises:

sending, by the radio frequency switching unit, the first locating signal, the second locating signal, the third locating signal, and the fourth locating signal to a base station, wherein the first locating signal, the second locating signal, the third locating signal, and the fourth locating signal are used for location solution.

3. The method according to claim 1, wherein the first message is first solution information, the second message is second solution information, the third message is third solution information, and the fourth message is fourth solution information; and the method further comprises:

sending, by the radio frequency switching unit, the first solution information, the second solution information, the third solution information, and the fourth solution information to a base station, wherein the first solution information is obtained by the first remote radio unit by performing location solution based on a first locating signal, the second solution information is obtained by the second remote radio unit by performing solution based on a second locating signal, the third solution information is obtained by the third remote radio unit by performing solution based on a third locating signal, and the fourth solution information is obtained by the fourth remote radio unit by performing solution based on a fourth locating signal, wherein the first locating signal is sent by the terminal to the first remote radio unit, the second locating signal is sent by the terminal to the second remote radio unit, the third locating signal is sent by the terminal to the third remote radio unit, and the fourth locating signal is sent by the terminal to the fourth remote radio unit.

4. A locating method, comprising:

receiving, by a first remote radio unit through a first receiving module, a first locating signal sent by a terminal;
performing, by the first remote radio unit, time of arrival TOA measurement based on the first locating signal to obtain first solution information; and
sending, by the first remote radio unit, the first solution information to a radio frequency switching unit.

5. The method according to claim 4, wherein the method further comprises:

receiving, by the first remote radio unit, a first air-interface synchronization correction message sent by the radio frequency switching unit, wherein the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and
sending, by the first remote radio unit, the first synchronization signal to the second remote radio unit based on the air-interface synchronization correction message.

6. The method according to claim 4 or 5, wherein the method further comprises:

receiving, by the first remote radio unit, a second air-interface synchronization correction message sent by the radio frequency switching unit, wherein the second air-interface synchronization correction message indicates the first remote radio unit to receive a second synchronization signal sent by a third remote radio unit;
receiving, by the first remote radio unit based on the second air-interface synchronization correction message, the second synchronization signal sent by the third remote radio unit;
performing, by the first radio frequency unit, calculation based on the second synchronization signal to obtain a second time difference of arrival TDOA, wherein the second time difference of arrival TDOA is for performing air-interface synchronization compensation on the first remote radio unit; and
sending, by the first radio frequency unit, the second time difference of arrival TDOA to the radio frequency switching unit.

7. A locating method, comprising:

receiving, by a first remote radio unit, a first air-interface synchronization correction message sent by a radio frequency switching unit, wherein the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and
sending, by the first remote radio unit, the first synchronization signal to the second remote radio unit based on the air-interface synchronization correction message.

8. The method according to claim 7, wherein the method further comprises:

   receiving, by the first remote radio unit, a second air-interface synchronization correction message sent by the radio frequency switching unit, wherein the second air-interface synchronization correction message indicates the first remote radio unit to receive a second synchronization signal sent by a third remote radio unit; receiving, by the first remote radio unit based on the second air-interface synchronization correction message, the second synchronization signal sent by the third remote radio unit; performing, by the first radio frequency unit, calculation based on the second synchronization signal to obtain a second time difference of arrival TDOA, wherein the second time difference of arrival TDOA is for performing air-interface synchronization compensation on the first remote radio unit; and sending, by the first radio frequency unit, the second time difference of arrival TDOA to the radio frequency switching unit.

9. A radio frequency switching unit, comprising:

   a receiving unit, configured to receive, through a first switching module, a first message sent by a first remote radio unit through a first module, wherein the first module is a sending module of the first remote radio unit, the first message is for locating a terminal, and the first switching module is a receiving module of the radio frequency switching unit, wherein the receiving unit is further configured to receive, through a second switching module, a second message sent by a second remote radio unit through a second module, wherein the second module is a sending module of the second remote radio unit, the second message is for locating the terminal, and the second switching module is a receiving module of the radio frequency switching unit; the receiving unit is further configured to receive, through a third switching module, a third message sent by a third remote radio unit through a third module, wherein the third module is a sending module of the third remote radio unit, the third message is for locating the terminal, and the third switching module is a receiving module of the radio frequency switching unit; the receiving unit is further configured to receive, through a fourth switching module, a fourth message sent by a fourth remote radio unit through a fourth module, wherein the fourth module is a sending module of the fourth remote radio unit, the fourth message is for locating the terminal, and the fourth switching module is a receiving module of the radio frequency switching unit; and the first switching module, the second switching module, the third switching module, and the fourth switching module are different receiving modules of the radio frequency switching unit.

10. The radio frequency switching unit according to claim 9, wherein the first message is a first locating signal, the second message is a second locating signal, the third message is a third locating signal, and the fourth message is a fourth locating signal; and the radio frequency switching unit further comprises: a sending unit, configured to send the first locating signal, the second locating signal, the third locating signal, and the fourth locating signal to a base station, wherein the first locating signal, the second locating signal, the third locating signal, and the fourth locating signal are used for location solution.

11. The radio frequency switching unit according to claim 10, wherein the first message is first solution information, the second message is second solution information, the third message is third solution information, and the fourth message is fourth solution information; and the sending unit is further configured to send the first solution information, the second solution information, the third solution information, and the fourth solution information to the base station, wherein the first solution information is obtained by the first remote radio unit by performing location solution based on the first locating signal, the second solution information is obtained by the second remote radio unit by performing solution based on the second locating signal, the third solution information is obtained by the third remote radio unit by performing solution based on the third locating signal, and the fourth solution information is obtained by the fourth remote radio unit by performing solution based on the fourth locating signal, wherein the first locating signal is sent by the terminal to the first remote radio unit, the second locating signal is sent by the terminal to the second remote radio unit, the third locating signal is sent by the terminal to the third remote radio unit, and the fourth locating signal is sent by the terminal to the fourth remote radio unit.

12. A remote radio unit, comprising:

   a receiving unit, configured to receive, through a first receiving module, a first locating signal sent by a terminal; a processing unit, configured to perform time of arrival TOA measurement based on the first locating signal to obtain first solution information; and a sending unit, configured to send the first solution information to a radio frequency switching unit.

13. The remote radio unit according to claim 12, wherein the receiving unit is further configured to receive a first air-interface synchronization correction message sent by the radio frequency switching unit, wherein the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and the sending unit is further configured to send the first synchronization signal to the second remote radio unit based on the air-interface synchronization correction message.

14. The remote radio unit according to claim 12 or 13, wherein the receiving unit is specifically configured to receive a second air-interface synchronization correction message sent by the radio frequency switching unit, wherein the second air-interface synchronization correction message indicates the first remote radio unit to receive a second synchronization signal sent by a third remote radio unit;

   the receiving unit is further configured to receive, based on the second air-interface synchronization correction message, the second synchronization signal sent by the third remote radio unit; the processing unit is further configured to perform calculation based on the second synchronization signal to obtain a second time difference of arrival TDOA, wherein the second time difference of arrival TDOA is for performing air-interface synchronization compensation on the first remote radio unit; and the sending unit is further configured to send the second time difference of arrival TDOA to the radio frequency switching unit.

15. A remote radio unit, comprising:

   a receiving unit, configured to receive a first air-interface synchronization correction message sent by a radio frequency switching unit, wherein the first air-interface synchronization correction message indicates the first remote radio unit to send a first synchronization signal to a second remote radio unit, the first synchronization signal is for calculating a first time difference of arrival TDOA between the first remote radio unit and the second remote radio unit, and the first time difference of arrival TDOA is for performing air-interface synchronization compensation on the second remote radio unit; and a sending unit, configured to send the first synchronization signal to the second remote radio unit based on the air-interface synchronization correction message.

16. The remote radio unit according to claim 15, wherein the receiving unit is further configured to receive a second air-interface synchronization correction message sent by the radio frequency switching unit, wherein the second air-interface synchronization correction message indicates the first remote radio unit to receive a second synchronization signal sent by a third remote radio unit; and

   the receiving unit is further configured to receive, based on the second air-interface synchronization correction message, the second synchronization signal sent by the third remote radio unit; and the remote radio unit further comprises:

      a processing unit, configured to perform calculation based on the second synchronization signal to obtain a second time difference of arrival TDOA, wherein the second time difference of arrival TDOA is for performing air-interface synchronization compensation on the first remote radio unit, wherein the sending unit is further configured to send the second time difference of arrival TDOA to the radio frequency switching unit.

17. A readable storage medium, configured to store instructions, wherein when the instructions are executed, the method according to any one of claims 1 to 8 is implemented.

FIG. 1

| Terminal | First remote radio unit | Second remote radio unit | Third remote radio unit | Fourth remote radio unit | Radio frequency switching unit |
|---|---|---|---|---|---|

201: First locating signal

202: Second locating signal

203: Third locating signal

204: Fourth locating signal

205: First locating signal

206: Second locating signal

207: Third locating signal

208: Fourth locating signal

209: Send the first locating signal, the second locating signal, the third locating signal, and the fourth locating signal to a base station

FIG. 2

Base station

Radio frequency switching unit

First module

Second module

Third module

Fourth module

First radio frequency unit

Second radio frequency unit

Third radio frequency unit

Fourth radio frequency unit

FIG. 3

|  | First module | Second module | Third module | Fourth module |
|---|---|---|---|---|
| Base station | First remote radio unit | Second remote radio unit | Third remote radio unit | Fourth remote radio unit |
|  | First locating signal | Second locating signal | Third locating signal | Fourth locating signal |

|  | First module | Second module | Third module | Fourth module |
|---|---|---|---|---|
| First remote radio unit | √ | × | × | × |
| Second remote radio unit | × | √ | × | × |
| Third remote radio unit | × | × | √ | × |
| Fourth remote radio unit | × | × | × | √ |

FIG. 4

| Terminal | First remote radio unit | Second remote radio unit | Third remote radio unit | Fourth remote radio unit | Radio frequency switching unit |
|---|---|---|---|---|---|

301: First locating signal

302: Second locating signal

303: Third locating signal

304: Fourth locating signal

305: Perform time of arrival TOA measurement based on the first locating signal to obtain first solution information

306: Perform time of arrival TOA measurement based on the second locating signal to obtain second solution information

307: Perform time of arrival TOA measurement based on the third locating signal to obtain third solution information

308: Perform time of arrival TOA measurement based on the fourth locating signal to obtain fourth solution information

309: First solution information

310: Second solution information

311: Third solution information

312: Fourth solution information

313: Send the first solution information, the second solution information, the third solution information, and the fourth solution information to a base station

FIG. 5

| First remote radio unit | Second remote radio unit | Third remote radio unit | Fourth remote radio unit | Radio frequency switching unit |
|---|---|---|---|---|

314: First air-interface synchronization correction information

315: Third air-interface synchronization correction information

316: Fourth air-interface synchronization correction information

317: Fifth air-interface synchronization correction information

318: First synchronization signal

319: Second synchronization signal

320: Third synchronization signal

321: Second air-interface synchronization correction information

FIG. 6

FIG. 7

FIG. 8

FIG. 9

FIG. 10

1101

1102

Receiving unit

Sending unit

FIG. 11

1201

1202

1203

Receiving unit

Sending unit

Processing unit

FIG. 12

Memory 1302

Program 1303

Processor 1301

Bus 1305

Interface 1304

FIG. 13

Memory 1402

Program 1403

Processor
1401

Bus 1405

Interface
1404

FIG. 14

## INTERNATIONAL SEARCH REPORT

| | International application No. |
|---|---|
| | **PCT/CN2021/140268** |

**A. CLASSIFICATION OF SUBJECT MATTER**

H04W 64/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 射频拉远, 远程单元, 远端, 交换单元, 集中单元, 扩展单元, 集线器, 汇聚器, 同时, 同一时刻, 到达时间, 解算, 同步, 校正, 补偿, RRU, pRRU, RRH, remote, HUB, pHUB, same time, TOA, synchronize

**C. DOCUMENTS CONSIDERED TO BE RELEVANT**

| Category* | Citation of document, with indication, where appropriate, of the relevant passages | Relevant to claim No. |
|---|---|---|
| X | CN 105451333 A (COMBA TELECOM TECHNOLOGY (GUANGZHOU) LTD.) 30 March 2016 (2016-03-30) <br> description, paragraphs [0019]-[0063] | 1-3, 9-11, 17 |
| X | CN 111093293 A (DATANG MOBILE COMMUNICATIONS EQUIPMENT CO., LTD.) 01 May 2020 (2020-05-01) <br> description paragraphs [0065]-[0157] | 1-3, 9-11, 17 |
| X | WO 2017219283 A1 (HUAWEI TECHNOLOGIES CO., LTD.) 28 December 2017 (2017-12-28) <br> description pages 8-27 | 4-6, 12-14, 17 |
| X | CN 106330350 A (HUAWEI TECHNOLOGIES CO., LTD.) 11 January 2017 (2017-01-11) <br> description paragraphs [0077]-[0257] | 7, 8, 15-17 |
| A | WO 2020173629 A1 (NOKIA SOLUTIONS & NETWORKS OY) 03 September 2020 (2020-09-03) <br> entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 February 2022** | **10 March 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/140268**

| Patent document cited in search report | | | Publication date (day/month/year) | Patent family member(s) | | | Publication date (day/month/year) |
|---|---|---|---|---|---|---|---|
| CN | 105451333 | A | 30 March 2016 | CN | 105451333 | B | 18 January 2019 |
| CN | 111093293 | A | 01 May 2020 | None | | | |
| WO | 2017219283 | A1 | 28 December 2017 | EP | 3461190 | A1 | 27 March 2019 |
| | | | | EP | 3461190 | A4 | 10 April 2019 |
| | | | | BR | 112018076434 | A2 | 09 April 2019 |
| | | | | US | 2019132816 | A1 | 02 May 2019 |
| | | | | US | 10588109 | B2 | 10 March 2020 |
| | | | | CN | 109314944 | A | 05 February 2019 |
| | | | | IN | 201847049067 | A | 04 January 2019 |
| CN | 106330350 | A | 11 January 2017 | WO | 2017000895 | A2 | 05 January 2017 |
| | | | | WO | 2017000895 | A3 | 16 February 2017 |
| | | | | ES | 2769069 | T3 | 24 June 2020 |
| | | | | EP | 3301832 | A2 | 04 April 2018 |
| | | | | EP | 3301832 | A4 | 27 June 2018 |
| | | | | EP | 3301832 | B1 | 25 December 2019 |
| | | | | US | 2018123666 | A1 | 03 May 2018 |
| | | | | US | 10320464 | B2 | 11 June 2019 |
| | | | | CN | 106330350 | B | 14 June 2019 |
| WO | 2020173629 | A1 | 03 September 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011604406